# EUROPÄISCHE PATENTANMELDUNG

(11) **EP 3 115 146 A1**
(43) Veröffentlichungstag der Anmeldung: **11.01.2017**
(21) Anmeldenummer: 15175450.4
(22) Anmeldetag: 06.07.2015
(51) Int. Cl.: B23K 35/30, B23K 35/362, C22C 9/04

(54) **LEGIERUNGEN**

(71) Anmelder: Umicore AG & Co. KG, 63457 Hanau-Wolfgang (DE)
(72) Erfinder: WIEHL, Gunther, 63741 Aschaffenburg (DE); THIEROLF-DOEPP, Steven, 63486 Bruchköbel (DE); FALLHEIER, Inge, 63589 Linsengericht (DE); STARCK, Sebastian, 61130 Nidderau-Windecken (DE); SCHNEE, Daniel, 63505 Langenselbold (DE); RIES, Helmut, 63594 Hasselroth (DE)

(57) **Zusammenfassung**

Die vorliegende Erfindung betrifft neue Lotlegierungen enthaltend Kupfer, Silber, Zink, Mangan und Indium, Verfahren zu ihrer Herstellung und deren Verwendung.

## Beschreibung

Hartlöten ist ein wichtiges Verfahren zum Verbinden von Bauteilen in der Serienfertigung und der Prototypenherstellung. Es ist ein ökonomisches Verfahren zum Verbinden metallischer Bauteile mit einem Metalladditiv, dem Hartlot, welches die Bauteile nur geringen mechanischen Spannungen aussetzt. Optional werden oft Flussmittel und/oder Inertgase eingesetzt. Die Schmelztemperatur des Hartlots ist niedriger als die Schmelztemperatur der zu lötenden Metallteile. Beide werden von dem geschmolzenen Lot benetzt ohne selbst zu schmelzen. Gebräuchliche Hartlotlegierungen für den Schmelzbereich von 600-800°C sind oft Ag-Cu-Zn - Lote und werden beschrieben in Normen wie z.B. DIN EN ISO 17672 und AWS A5.8M/A5.8-2011 (Brazing Filler Metals) und US-A-2019984.

Solche Legierungen können für zahlreiche Anwendungen verwendet werden, aber erfüllen nicht immer alle Anforderungen hinsichtlich ihrer Korrosionsneigung und wegen eines Schmelzbereichs, der bei einem definierten Silbergehalt möglichst niedrig sein soll.

Modifizierte Ag-Cu-Zn Lotlegierungen mit einem oft höheren Silbergehalt enthalten außerdem Nickel (Ni) und Mangan (Mn) und sind bekannt aus DE 19725956. Solche Lotlegierungen werden oft in der Werkzeugindustrie genutzt. Nickel kann zur Verstärkung der Lötverbindungen zugefügt werden und um die Benetzung auf Werkzeugstählen zu verbessern. Dies erhöht jedoch den Schmelzbereich der Legierungen.

EP-A-1078711 zeigt Ag-Cu-Zn Lotlegierungen, die geringe Mengen Gallium, Indium, Zinn oder Mangan enthalten. Diesen Legierungen fehlen oft gute mechanische Eigenschaften wie Duktilität und Verformbarkeit und zeigen erhöhte Schmelztemperaturen bei niedrigen Silbergehalten und somit die gleichen Nachteile wie Materialien mit höheren Silbergehalten. CN-A-102909489 zeigt Hartlote, die zum Löten bei oberhalb 850°C geeignet sind, nicht jedoch bei niedrigeren Temperaturen von beispielsweise 720°C oder 730°C.

Die Aufgabe war die Bereitstellung neuer Lotlegierungen, die leicht herzustellen sind, trotz deutlich abgesenktem Silbergehalt gegenüber Ag125 bei vergleichbaren Löttemperaturen verarbeitet werden können, um beim Verlöten von Kupfer, Messing, Edelstählen und Baustählen, wie zum Beispiel S235. Übliche Baustähle sind beispielsweise S235JR+AR (neue Ausgabe EN 10025-2:2004-10, früher S235JRG2, noch früher St 37-2, Werkstoffnummer 1.0036 bis 1.0038, frühere Bezeichnung nach EU 25-72 auch Fe 360 B) oder auch S355J2+N (neue Ausgabe EN 10025-2:2004-10, früher S355J2G3, noch früher St 52-3 N, Werkstoffnummer 1.0577 bzw. 1.0570, frühere Bezeichnung nach EU 25-72 auch Fe 510 D1). Die Baustahlsorten sind in EN 10025 genormt.

Weiter müssen die Lotlegierungen bei vergleichbarer Temperatur wie Ag125 vollständig aufgeschmolzen sein und gleichzeitig eine gute Kaltverformbarkeit bei Raumtemperatur besitzen (z.B. für Kaltwalzen, Drahtziehen oder Drahtwalzen) und eine ausreichende Duktilität für Lötverbindungen besitzt, und kein Cadmium enthalten, um ökologisch unbedenklich zu sein. Vorteilhaft sind Legierungen, die eine Mindestkaltverformbarkeit von 10% nach Rekristallisation von 10% (bezogen auf den Durchmesser vor und nach der Verformung) in der Drahtform aufweisen.

Es ist bekannt, dass der Silbergehalt von Ag-Cu-X -Legierungen eine wichtige Rolle spielt für die Liquidustemperatur der Legierung durch das eutektisch Verhalten des Ag-Cu-Systems. Niedrig schmelzend bei einem bestimmten Silbergehalt bedeutet, dass ein bestimmter Silbergehalt von z.B. 13% signifikant höhere Schmelztemperaturen besitzt als eine Legierung mit 25% Silber, wenn keine zusätzlichen schmelzpunktabsenkenden Elemente zugegeben werden. Dabei müssen die schmelzpunktabsenkenden Elemente in geschickter Art und Weise kombiniert und mit schmelzpunktsteigernden Elementen abgestimmt werden, so dass die Kaltumformbarkeit sowie die Festigkeit der Fügeverbindung nicht negativ beeinflusst werden.

Die Aufgabe wird gelöst durch ein Lotlegierung, welche frei ist von Alkali- und Erdalkalimetallen, Phosphor und Cadmium, mit Ausnahme unvermeidbarer Verunreinigungen, enthaltend 10 bis 15 Gew.-% Silber, 20 bis 35 Gew.-% Zink, 5 Gew.-% bis 15 Gew.-% Mangan, 0,1 Gew.-% bis 4 Gew.-% Indium, ad 100 Gew.-% Kupfer und unvermeidbare Verunreinigungen, wobei die Legierung außerdem 0 Gew.-% bis 3 Gew.-% Zinn und/oder Gallium sowie jeweils 0 Gew.-% bis 1 Gew.-% Silizium, Germanium, Nickel enthalten kann und sich die Mengen der Bestandteile zu insgesamt 100 Gew.-% ergänzen.

Eine spezifische Ausgestaltung betrifft eine Lotlegierung enthaltend 11 bis 14 Gew.-% Silber, 20 bis 30 Gew.-% Zink, 8 Gew.-% bis 12 Gew.-% Mangan, 1 Gew.-% bis 3 Gew.-% Indium, ad 100 Gew.-% Kupfer und unvermeidbare Verunreinigungen und wobei sich die Mengen der Bestandteile zu insgesamt 100 Gew.-% ergänzen;
oder
eine Lotlegierung enthaltend 12 bis 14 Gew.-% Silber, 22 bis 28 Gew.-% Zink, 9 Gew.-% bis 11 Gew.-% Mangan, 1,5 Gew.-% bis 2,5 Gew.-% Indium, ad 100 Gew.-% Kupfer und unvermeidbare Verunreinigungen und wobei sich die Mengen der Bestandteile zu insgesamt 100 Gew.-% ergänzen.

Auch diese Ausführungsformen sind frei von Alkali- und Erdalkalimetallen, Phosphor und Cadmium, mit Ausnahme unvermeidbarer Verunreinigungen.

Optional können die obigen Ausgestaltungen 0,1 bis 2,0 Gew.-%, insbesondere 0,5 bis 1,5 Gew.-% Zinn enthalten. Diese können zur Kontrolle des Schmelzpunktes, insbesondere dessen Absenkung zugefügt werden, allerdings bei zu hohen Gehalten zu einer Versprödung führen.

Optional können die obigen Ausgestaltungen außerdem 0,1 bis 0,8 Gew,-%, insbesondere 0,3 Gew.-% bis 0,7 Gew.-% Gallium enthalten, gegebenenfalls gemeinsam mit dem oben erwähnten Zusatz von Zinn.

Optional können die obigen Ausgestaltungen 0,1 bis 0,6 Gew.-%, insbesondere 0,2 bis 0,5 Gew.-% Germanium enthalten, gegebenenfalls gemeinsam mit dem oben erwähnten Zusatz von Zinn, Gallium oder deren Kombinationen. Ähnlich Zinn und Gallium kann Germanium zur Feineinstellung des Schmelzpunktes zugesetzt werden, führt aber ebenso zur Versprödung bei Zugabe von zu großen Mengen.

Optional können die obigen Ausgestaltungen 0,1 bis 0,5 Gew.-%, insbesondere 0,2 bis 0,4 Gew.-% Silizium enthalten, gegebenenfalls gemeinsam mit dem oben erwähnten Zusatz von Zinn, Gallium, Germanium oder deren Kombinationen. Diese können zur Kontrolle des Schmelzpunktes und der Fließfähigkeit des Lotes zugefügt werden, allerdings bei zu hohen Gehalten zu Versprödungen der Fügezone beim Löten von Eisenlegierungen führen.

Optional können die obigen Ausgestaltungen 0,2 bis 1,0 Gew.-%, insbesondere 0,3 bis 0,7 Gew.-% Nickel enthalten, gegebenenfalls gemeinsam mit dem oben erwähnten Zusatz von Zinn, Gallium, Germanium, Silizium oder deren Kombinationen. Diese können zur Kontrolle der Benetzungsfähigkeit aus Eisen- und Kupferlegierungen, allerdings bei zu hohen Gehalten zu steigenden Schmelzbereichen führen.

Cadmium ist wegen seiner hohen Toxizität zu vermeiden, Alkali- und Erdalkalimetalle (also Lithium, Natrium, Kalium, Rubidium, Cäsium, Francium, Beryllium, Magnesium, Calcium, Strontium, Barium und Radium) sind zu oxidationsempfindlich. Phosphor (P) darf wegen der Bildung spröder intermetallischer Phasen in Lotverbindungen mit Eisen oder eisenhaltigen Legierungen nicht verwendet werden.

Alkali- und Erdalkalimetalle, Phosphor und Cadmium dürfen lediglich in Mengen unvermeidbarer Verunreinigungen vorhanden sein, ebenso wie bestimmte weitere Metalle. Der Gehalt der unvermeidbaren Verunreinigungen zusammen darf nicht höher als 0,5 Gew.-%, bevorzugt 0,3 Gew.-% sein.

Aluminium kann als Verunreinigung in Mengen von bis zu 0,001 Gew.-% vorhanden sein. Phosphor, Magnesium oder Calcium, ebenso wie die anderen, oben aufgeführten Alkali- und Erdalkalimetalle, können als Verunreinigung in Mengen von bis zu jeweils 0,008 Gew.-% vorhanden sein. Cadmium, Selen, Tellur, Zinn, Antimon, Wismut und Arsen können als Verunreinigung in Mengen von bis zu je 0,01 Gew.-% vorhanden sein. Blei als Verunreinigung in Mengen von bis zu 0,025 Gew.-% vorhanden sein. Schwefel kann als Verunreinigung in Mengen von bis zu 0,03 Gew.-% vorhanden sein. Auch Eisen kann als Verunreinigung in Mengen von bis zu 0,15 Gew.-% vorhanden sein. Verunreinigungen können in Mengen von bis zu 0,5 Gew.-% oder 0,3 Gew.- % oder 0,15 Gew.-% insgesamt vorhanden sein. Frei von Cadmium und Phosphor bedeutet als ein Cadmiumgehalt von bis zu je 0,01 Gew.-% und Phosphorgehalt von bis zu 0,008 Gew.-%.

Cobalt darf nur als unvermeidbare Verunreinigung in Mengen von bis zu 0,05 Gew.-%, insbesondere nur 0,01 Gew.-% enthalten sein, da Cobalt zu einer starken Erhöhung der Liquidustemperatur führt.

Um Missverständnisse auszuschließen wird darauf hingewiesen, dass die Lotlegierung der Erfindung Kupfer enthalten muss. Der Kupfergehalt liegt normalerweise bei 26 bis 64,9 Gew.-%.

In dieser Ausführungsform enthalten die Legierungen, die mit Ausnahme unvermeidbarer Verunreinigungen frei sind von Alkali- und Erdalkalimetallen, Phosphor und Cadmium daher
10 bis 15 Gew.-%, 10 bis 13,5 Gew.-%, oder 10 bis 13 Gew.-% Silber;
20 bis 35 Gew.-%, 15 bis 25,5 Gew.-%, oder 20 bis 25 Gew.-% Zink;
5 bis 15 Gew.-%, 8 bis 12 Gew.-% oder 9 bis 11 Gew.-% Mangan;
0,1 bis 4 Gew.-%, 1 bis 2,5 Gew.-% oder 1,7 bis 2,3 Gew.-% Indium;
26 bis 64,9 Gew.-%, 31 bis 64,9 Gew.-%, 46,5 bis 66 Gew.-% oder 48,7 bis 59,3 Gew.-% Kupfer;
optional 0,1 bis 3 Gew.-%, 0,1 bis 1,5 Gew.-% oder 0,6 bis 1,4 Gew.-% Zinn;
optional 0,1 bis 3 Gew.-%, 0,1 bis 0,8 Gew.-% oder 0,4 bis 0,7 Gew.-% Gallium;
optional 0,1 bis 1 Gew.-%, 0,1 bis 0,5 Gew.-% oder 0,2 bis 0,5 Gew.-% Silizium;
optional 0,1 bis 1 Gew.-%, 0,1 bis 0,5 Gew.-% oder 0,2 bis 0,5 Gew.-% Nickel;
optional 0,1 bis 1 Gew.-%, 0,1 bis 0,5 Gew.-% oder 0,2 bis 0,5 Gew.-% Germanium und unvermeidbare Verunreinigungen, wobei sich die Mengen der Bestandteile zu insgesamt 100 Gew.-% ergänzen.

Eine Lotlegierung, welche frei ist von Alkali- und Erdalkalimetallen, Phosphor und Cadmium, mit Ausnahme unvermeidbarer Verunreinigungen, besteht daher aus
12 bis 14 Gew.-% Silber,
22 bis 28 Gew.-% Zink,
9 Gew.-% bis 11 Gew.-% Mangan,
1,5 Gew.-% bis 2,5 Gew.-% Indium, 0,5 Gew.-% bis 1,5 Gew.-% Zinn und
ad 100 Gew.-% Kupfer und unvermeidbare Verunreinigungen, wobei sich die Mengen der Bestandteile zu insgesamt 100 Gew.-% ergänzen.

In einer spezifischen Ausgestaltung enthält die Lotlegierung daher 12 bis 14 Gew.-% Silber,
22 bis 28 Gew.-% Zink,
9 Gew.-% bis 11 Gew.-% Mangan,
1,5 Gew.-% bis 2,5 Gew.-% Indium,
0,5 Gew.-% bis 1,5 Gew.-% Zinn, 0,2 Gew.-% bis 0,4 Gew.-% Silizium und
ad 100 Gew.-% Kupfer und unvermeidbare Verunreinigungen, wobei sich die Mengen der Bestandteile zu insgesamt 100 Gew.-% ergänzen; oder in einer weiteren Ausgestaltung
12 bis 14 Gew.-% Silber,
22 bis 28 Gew.-% Zink,
9 Gew.-% bis 11 Gew.-% Mangan,
1,5 Gew.-% bis 2,5 Gew.-% Indium,
0,5 Gew.-% bis 1,5 Gew.-% Zinn,
0,2 Gew.-% bis 0,4 Gew.-% Silicium, 0,3 Gew.-% bis 0,7 Gew.-% Gallium und
ad 100 Gew.-% Kupfer und unvermeidbare Verunreinigungen und wobei sich die Mengen der Bestandteile zu insgesamt 100 Gew.-% ergänzen; oder in einer weiteren Ausgestaltung
12 bis 14 Gew.-% Silber,
22 bis 28 Gew.-% Zink,
9 Gew.-% bis 11 Gew.-% Mangan,
1,5 Gew.-% bis 2,5 Gew.-% Indium,
0,5 Gew.-% bis 1,5 Gew.-% Zinn,
0,2 Gew.-% bis 0,4 Gew.-% Silicium,
0,3 Gew.-% bis 0,7 Gew.-% Gallium,
0,3 Gew.-% bis 0,7 Gew.-% Nickel und
ad 100 Gew.-% Kupfer und unvermeidbare Verunreinigungen und wobei sich die Mengen der Bestandteile zu insgesamt 100 Gew.-% ergänzen.

Die Angaben für unvermeidbare Verunreinigungen oben sind für diese Ausführungsformen ebenfalls zutreffend.

In einer spezifischen Ausführungsform besteht die Lotlegierung aus
12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn und ad 100 Gew.-% Kupfer und unvermeidbare Verunreinigungen und wobei sich die Mengen der Bestandteile zu insgesamt 100 Gew.-% ergänzen;
oder in einer weiteren Ausgestaltung
12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn, 0,2 Gew.-% bis 0,4 Gew.-% Silizium und ad 100 Gew.-% Kupfer und unvermeidbare Verunreinigungen und wobei sich die Mengen der Bestandteile zu insgesamt 100 Gew.-% ergänzen;
oder in einer weiteren Ausgestaltung
12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn, 0,2 Gew.-% bis 0,4 Gew.-% Silicium, 0,3 Gew.-% bis 0,7 Gew.-% Gallium und ad 100 Gew.-% Kupfer und unvermeidbare Verunreinigungen und wobei sich die Mengen der Bestandteile zu insgesamt 100 Gew.-% ergänzen;
oder in einer weiteren Ausgestaltung
12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn, 0,2 Gew.-% bis 0,4 Gew.-% Silicium, 0,3 Gew.-% bis 0,7 Gew.-% Gallium, 0,3 Gew.-% bis 0,7 Gew.-% Nickel und ad 100 Gew.-% Kupfer und unvermeidbare Verunreinigungen und wobei sich die Mengen der Bestandteile zu insgesamt 100 Gew.-% ergänzen;

Geeignete Beispiele von Legierungen bestehen aus 49 Gew.-% Kupfer, 13 Gew.-% Silber, 25 Gew.-% Zink, 10 Gew.-% Mangan, 2 Gew.-% Indium und 1 Gew.-% Zinn, oder 48,7 Gew.-% Kupfer, 13 Gew.-% Silber, 25 Gew.-% Zink, 10 Gew.-% Mangan, 2 Gew.-% Indium, 1 Gew.-% Zinn und 0,3 Gew.- % Silizium, oder 48,2 Gew.-% Kupfer, 13 Gew.-% Silber, 25 Gew.-% Zink, 10 Gew.-% Mangan, 2 Gew.-% Indium, 1 Gew.-% Zinn, 0,3 Gew.-% Silizium und 0,5 Gew.-% Gallium, oder 47,7 Gew.-% Kupfer, 13 Gew.-% Silber, 25 Gew.-% Zink, 10 Gew.-% Mangan, 2 Gew.-% Indium, 1 Gew.-% Zinn, 0,3 Gew.-% Silizium, 0,5 Gew.-% Gallium und 0,5 Gew.-% Nickel.

Die Lotlegierung kann erhalten werden durch mechanisches Legieren oder Flüssigphasenlegieren. Ein üblicher Weg ist Schmelzen. Die Lotlegierung der Erfindung kann einfach durch gemeinsames Schmelzen der entsprechenden Mengen der Legierungsbestandteile erhalten werden. Es ist auch möglich Legierungen als Ausgangsprodukte zu verwenden, also z.B. eine Legierung bestehend aus Silber, Kupfer und Zink mit den entsprechenden Mengen an Mangan und Indium oder einer Legierung daraus zu ergänzen und diese Kombination zu schmelzen.

Das Schmelzen kann in Inertgas erfolgen, wie Argon oder Stickstoff, oder auch in Luft. Gas, elektrische und Induktionsöfen sind, unter Anderem, geeignete Vorrichtungen für diesen Zweck.

Die geschmolzene Legierung kann in eine Form gegossen, verdüst oder granuliert werden, um so Pulver oder Granulate zu erhalten. Das verdüste Pulver kann z.B. für Lotpasten verwendet werden. Sowohl diese Pulver als auch Granulate können zum Pressen und Extrudieren verwendet werden, wie weiter unten beschrieben. Auf diese Weise können auch Pulver und Granulate zur Herstellung von Stanzteilen, Drähten oder Stangen verwendet werden. Das Schmelzen können somit Produktionsmethoden wie Barrenguss, Stranggießen, Schmelzspinnen, Legierungsgranulation oder Verdüsung nachfolgen. Barren und Bolzen können auch zum Strangpressen bzw. Extrudieren der Lotlegierung benutzt werden und diese so in Gestalt eines Drahtes oder Bandes gebracht werden. Die Legierung kann als Massivlot produziert und eingesetzt werden, also in Gestalt von beispielsweise Stab, Draht, Drahtring, Folie, Blech oder aus Folie oder Blech gefertigten Stanzteilen. Vorteilhafte Dicken für derart verwendete Folien oder Bleche liegen bei 0,1 mm bis 0,5 mm, Drähte sowie Stäbe können im Allgemeinen Durchmesser zwischen 0,5 mm und 2,5 mm, insbesondere 1 mm bis 2 mm typischerweise haben.

Die Geometrie solcher Halbfabrikate kann nach Kundenanforderung angepasst werden durch Pressen, Schmieden, Drahtziehen, Heiß- oder Kaltwalzen, Drahtwalzen, Glätten, Schneiden, Stanzen oder deren Kombinationen. Strangguss ist eine weitere Option zur Herstellung von Drähten, Bändern oder Stangen. Außerdem ist es möglich, die Lotlegierung durch Walzen von Blechen, Herstellung von geformten Gegenständen wie Ringen oder Stanzen von Stanzteilen in die gewünschte Form zu bringen. Das Lot kann -insbesondere in Form von Stäben, Drähten und Drahtringen- auch mit Flußmitteln versehen und dabei ganz oder teilweise ummantelt sein.

Die Lotlegierung ist besonders geeignet zum Hartlöten von Kupfer, Messing, Edelstählen und Baustählen, wie beispielsweise S235, als Fügepartner.

Die Lotlegierung ist ebenfalls geeignet zum Verlöten von Stahl gegen Stahl. Geeignete Stähle sind u.A. in den Normen EN 10025-2 und DIN EN 10027-2 beschrieben und beispielsweise 1.6582, 1.2003, 1.2235, 1.8159, S235 oder S355.

Im Allgemeinen können für die Lotlegierungen der Erfindung bekannte Flussmittel eingesetzt werden in der Form von Pasten, Lacken, Pulvern, Beschichtungen der Lotlegierung, die hierzu z.B. in Form von Stangen, Stäben, Bändern oder Drähten vorliegen kann.

Ebenso können gesinterte Formteile aus der Lotlegierung und Flussmittel verwendet werden. Hierzu werden gepulvertes Lot und gepulvertes Flussmittel vermischt, gepresst (z.B. durch kaltisostatisches Pressen) und einer Wärmebehandlung unterzogen, wie z.B. gesintert, um eine ausreichende Festigkeit zu erhalten.

Geeignete Flussmittel sind beispielsweise FH10 und FH12, die beschrieben sind in der Norm DIN EN 1045. Gut geeignet sind hierbei BrazeTech h 280, (FH10), BrazeTech h 285 (FH12), BrazeTech 80 (FH10) und BrazeTech h Spezial (FH12) oder BrazeTec CoMet (FH10).

Daher betrifft die Erfindung auch geformte Gegenstände aus einer der Lotlegierungen der Erfindung in Kombination mit Flussmitteln. Die Lotlegierungen können insbesondere in Form von Drähten, Drahtringen oder Stangen vorliegen und mit einem Flussmittel beschichtet sein. Insbesondere können Stangen oder Drähte aus der Lotlegierung der Erfindung beschichtet sein mit einem Flussmittel ausgewählt aus FH10 und FH12, beschrieben in Norm DIN EN 1045.

Das Hartlöten mit den Lotlegierungen der Erfindung kann ausgeführt werden wie in dem folgenden Verfahren zum Verbinden von Metallteilen durch Löten mit den Schritten
- Bereitstellen eines Grundmaterials;
- Bereitstellen eines Teils, welches mit dem Grundmaterial zu verbinden ist;
- Anordnen von Grundmaterial und Teil in Kontakt zueinander in einer zum Löten geeigneten Weise;
- Anordnen einer Lotlegierung gemäß der Erfindung oder dessen Kombination mit einem Flussmittel in Kontakt mit dem Grundmaterial, dem Teil oder beiden in einer Weise, die zum Löten geeignet ist;
- Wärmebehandlung der so erhaltenen Anordnung bei einer ausreichenden Temperatur um die Hartlötung zu bewirken und so ein verbundenes Teil zu erhalten;
- Abkühlen des verbundenen Teils.

Das Grundmaterial und das Teil können wie oben beschrieben insbesondere ausgewählt sein aus Kupfer, Messing, Baustahl oder Edelstahl. Das Teil und das Grundmaterial können aus gleichem oder verschiedenem Material gefertigt sein.

Die vorliegende Anmeldung betrifft auch verbundene Teile, die nach diesem Verfahren erhalten wurden.

Sowohl das Teil wie auch das Grundmaterial können verschiedene Zusammensetzungen, Formen und Abmessungen haben und können hinsichtlich dieser Parameter jeweils gleich oder unterschiedlich sein.

Es ist auch möglich eine Mehrzahl von Teilen mit dem Grundmaterial zu verbinden, so dass mehrere Teile, wie z.B. mehrere Stahlteile, mit einem Grundmaterial, wie z.B. einem Kupfer- oder Messingmaterial, verbunden sein können oder umgekehrt.

Diese werden in gegenseitigem Kontakt auf solche Weise angeordnet, dass sie durch Löten miteinander verbunden werden können. Ein Lotmaterial gemäß der Erfindung, optional in Kombination mit einem Flussmittel, wird dann auf dem Teil, dem Grundmaterial oder beiden angeordnet. Dies kann auch vor dem Anordnen von Teil und Grundmaterial aufeinander geschehen, z.B. durch Beschichten mit einer Lotpaste enthaltend eine Lotlegierung gemäß der Erfindung, und anschließendem Anordnen oder durch eine kontinuierliche Zuführung während der Wärmebehandlung, oder die Lotlegierung kann als Formteil wie z.B. als Lotring aufgebracht werden. Das Flussmittel kann vor oder gleichzeitig mit der Lotlegierung aufgebracht werden. Eine Lotstange mit einer Beschichtung oder einem Kern aus einem Flussmittel ist eine Möglichkeit um das Flussmittel gleichzeitig mit dem Lot aufzubringen, aber das Teil, das Grundmaterial oder beide können auch selbst mit einem Flussmittel versehen werden, z.B. durch Aufbringen einer flussmittelhaltigen Flüssigkeit.

Die Wärmebehandlung kann durch Flammenlöten, durch Induktionslöten, aber auch in einem Ofen (Ofenlöten) oder auf andere Weise erfolgen. Inertgas wie Argon, Stickstoff oder Wasserstoff oder deren Gemische bzw. silandotierte Atmosphären können ebenso verwendet werden wie Hartlöten an der Luft oder im Vakuum. Die Temperatur der Wärmebehandlung muß ausreichend sein, um das Lot zu schmelzen und dessen Fließen und Benetzen zu gestatten. Der Lötvorgang kann auch unter zusätzlicher Ultraschallanregung durchgeführt werden, um eine verbesserte Festigkeit der Naht, Vermeidung von Gasporen oder Einschlüssen von Flussmittel zu erreichen. Die Temperatur muß jedoch unterhalb der Schmelztemperaturen des Grundmaterials oder des Teils liegen. Nach der Wärmebehandlung wird dem verbundenen Teil die Abkühlung gestattet.

Hierzu sind Löttemperaturen im Bereich von mindestens 680°C, besser mindestens 775°C, insbesondere 680°C bis 950°C oder 775°C bis 790°C gut geeignet. Bei den Legierungen ist es vorteilhaft, daß Löttemperaturen von 775°C bis 790°C insbesondere auch mit Silbergehalten von nur 12 Gew.-% bis 14 Gew.-% zu guten Ergebnissen führen.

Daraus ergibt sich ein Lötverfahren mit den Schritten
- Bereitstellen eines Grundmaterials;
- Bereitstellen eines Teils, welches mit dem Grundmaterial zu verbinden ist;
- Anordnen von Grundmaterial und Teil in Kontakt zueinander in einer zum Löten geeigneten Weise;
- Anordnen einer Lotlegierung gemäß der Erfindung oder dessen Kombination mit einem Flussmittel in Kontakt mit dem Grundmaterial, dem Teil oder beiden in einer Weise, die zum Löten geeignet ist;
- Wärmebehandlung der so erhaltenen Anordnung auf eine Temperatur von mindestens 680°C um die Hartlötung zu bewirken und so ein verbundenes Teil zu erhalten;
- Abkühlen des verbundenen Teils.

### Beispiele

Die Legierungen wurden erhalten durch Schmelzen der entsprechenden Mengen der Legierungsbestandteile in einem Tiegel in einem Induktionsofen und Gießen in eine Graphitform. Diese Proben wurden für die Untersuchung der Legierungen benutzt. Die Zusammensetzungen in der Tabelle enthalten Angaben in Gewichtsprozent (Gew.-%).

Die Kaltumformbarkeit (Tabelle: K) wurde beurteilt durch wiederholtes Kaltwalzen. Es wurden mehrere Kaltwalzvorgänge mit einer Dickenreduktion von je 1 mm durchgeführt ohne Zwischenglühen, bis ein Reißen der Probe auftrat. Das Ergebnis ist in der Tabelle aufgeführt.

Die Beurteilungen haben die folgenden Bedeutungen:
+ gut umformbar, o eingeschränkt umformbar, - schlecht umformbar. Liquidustemperaturen wurden in Relation zu dem standardisierten Hartlot AG125 in der DIN EN ISO 17672 angegeben. TL ist die Liquidustemperatur der jeweiligen Legierung in der angegebenen Zusammensetzung in den Beispielen und Vergleichsbeispielen. Die verwendeten Symbole bedeuten:
   ≈ Liquidustemperatur maximal 15°C nach höher oder niedriger als die Liquidustemperatur des Hartlotes AG125 nach DIN EN ISO 17672 ab.
   < Liquidustemperatur liegt um mehr als 15°C niedriger als die Liquidustemperatur des Hartlotes AG125 nach DIN EN ISO 17672.
   > Liquidustemperatur liegt um mehr als 15°C höher als die Liquidustemperatur des Hartlotes AG125 nach DIN EN ISO 17672.

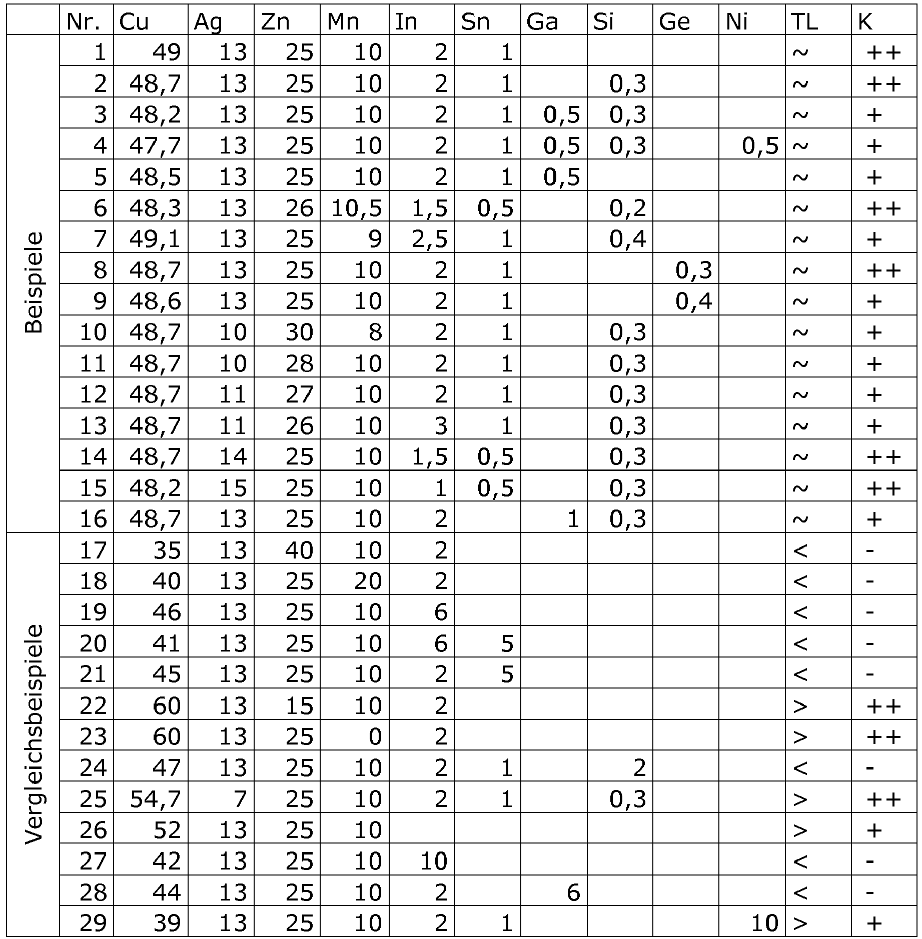

## Patentansprüche

1. Lotlegierung, welche frei ist von Alkali- und Erdalkalimetallen, Phosphor und Cadmium, mit Ausnahme unvermeidbarer Verunreinigungen, enthaltend 10 bis 15 Gew.-% Silber, 20 bis 35 Gew.-% Zink, 5 Gew.- % bis 15 Gew.-% Mangan, 0,1 Gew.-% bis 4 Gew.-% Indium, ad 100 Gew.-% Kupfer und unvermeidbare Verunreinigungen, wobei die Legierung außerdem 0 Gew.-% bis 3 Gew.-% Zinn und/oder Gallium sowie jeweils 0 Gew.-% bis 1 Gew.-% Silizium, Germanium, Nickel enthalten kann und sich die Mengen der Bestandteile zu insgesamt 100 Gew.-% ergänzen.

2. Lotlegierung nach Anspruch 1, enthaltend 11 bis 14 Gew.-% Silber, 20 bis 30 Gew.-% Zink, 8 Gew.-% bis 12 Gew.-% Mangan, 1 Gew.-% bis 3 Gew.-% Indium, ad 100 Gew.-% Kupfer und unvermeidbare Verunreinigungen und wobei sich die Mengen der Bestandteile zu insgesamt 100 Gew.-% ergänzen.

3. Lotlegierung nach Anspruch 1 oder 2, enthaltend 12 bis 14 Gew.-% Silber, 22 bis 28 Gew.-% Zink, 9 Gew.-% bis 11 Gew.-% Mangan, 1,5 Gew.-% bis 2,5 Gew.-% Indium, ad 100 Gew.-% Kupfer und unvermeidbare Verunreinigungen und wobei sich die Mengen der Bestandteile zu insgesamt 100 Gew.-% ergänzen.

4. Lotlegierung nach einem oder mehreren der Ansprüche 1 bis 3, enthaltend ein Elements ausgewählt aus der Gruppe bestehend aus Zinn, Gallium, Silizium, Nickel oder deren Kombinationen.

5. Lotlegierung nach einem oder mehreren der Ansprüche 1 bis 4, enthaltend 0,1 bis 2,0 Gew.-%, insbesondere 0,5 bis 1,5 Gew.-% Zinn, und/oder 0,1 bis 0,8 Gew,-%, insbesondere 0,3 Gew.-% bis 0,7 Gew.- % Gallium und/oder 0,1 bis 0,5 Gew.-%, insbesondere 0,2 bis 0,4 Gew.-% Silicium und/oder 0,2 bis 1,0 Gew.-%, insbesondere 0,3 bis 0,7 Gew.-% Nickel und/oder 0,1 bis 0,6 Gew.-%, insbesondere 0,2 bis 0,5 Gew.-% Germanium.

6. Lotlegierung nach einem oder mehreren der Ansprüche 1 bis 5, bestehend aus 12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn und ad 100 Gew.-% Kupfer und unvermeidbare Verunreinigungen und wobei sich die Mengen der Bestandteile zu insgesamt 100 Gew.-% ergänzen.

7. Lotlegierung nach einem oder mehreren der Ansprüche 1 bis 5, bestehend aus 12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn, 0,2 Gew.-% bis 0,4 Gew.-% Silizium und ad 100 Gew.-% Kupfer und unvermeidbare Verunreinigungen und wobei sich die Mengen der Bestandteile zu insgesamt 100 Gew.-% ergänzen.

8. Lotlegierung nach einem oder mehreren der Ansprüche 1 bis 5, bestehend aus 12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn, 0,2 Gew.-% bis 0,4 Gew.-% Silicium, 0,3 Gew.-% bis 0,7 Gew.-% Gallium und ad 100 Gew.-% Kupfer und unvermeidbare Verunreinigungen und wobei sich die Mengen der Bestandteile zu insgesamt 100 Gew.-% ergänzen.

9. Lotlegierung nach einem oder mehreren der Ansprüche 1 bis 5, bestehend aus 12 bis 14 Gew.-% Silber, 22 bis 28 Gew.-% Zink, 9 Gew.-% bis 11 Gew.-% Mangan, 1,5 Gew.-% bis 2,5 Gew.-% Indium, 0,5 Gew.-% bis 1,5 Gew.-% Zinn, 0,2 Gew.-% bis 0,4 Gew.-% Silicium, 0,3 Gew.-% bis 0,7 Gew.-% Gallium, 0,3 Gew.-% bis 0,7 Gew.-% Nickel und ad 100 Gew.-% Kupfer und unvermeidbare Verunreinigungen und wobei sich die Mengen der Bestandteile zu insgesamt 100 Gew.-% ergänzen.

10. Lotlegierung der Zusammensetzung CuAg13Zn25Mn10In2Sn1, CuAg13Zn25Mn10In2SniSi0,3, CuAg13Zn25Mn10In2SniSi0,3Ga0,5 oder CuAg13Zn25Mn10In2Sn1Si0,3Ga0,5Ni0,5.

11. Lotlegierung nach einem oder mehreren der Ansprüche 1 bis 10, enthaltend 26 Gew.-% bis 64,9 Gew.-% Kupfer.

12. Kombination einer Lotlegierung nach einem oder mehreren der vorangehenden Ansprüche mit einem Flussmittel.

13. Verfahren zum Verbinden von Metallteilen enthaltend die Schritte
- Bereitstellen eines Grundmaterials;
- Bereitstellen eines Teils, welches mit dem Grundmaterial zu verbinden ist;
- Anordnen von Grundmaterial und Teil in Kontakt zueinander in einer zum Löten geeigneten Weise;
- Anordnen einer Lotlegierung gemäß einem oder mehreren der Ansprüche 1 bis 11 oder einer Kombination nach Anspruch 12 in Kontakt zu dem Grundmaterial, dem Teil oder beiden in einer zum Löten geeigneten Weise;
- Wärmebehandlung der so erhaltenen Anordnung bei einer ausreichenden Temperatur um die Hartlötung zu bewirken und so ein verbundenes Teil zu erhalten;
- Abkühlen des verbundenen Teils.

14. Verfahren nach Anspruch 13, wobei die ausreichende Temperatur um die Hartlötung zu bewirken bei mindestens 680°C, mindestens 775°C, insbesondere 680°C bis 950°C oder 775°C bis 790°C liegt.

15. Verfahren nach Anspruch 13 oder 12, wobei das Grundmaterial und/oder das Teil Kupfer, Messing, eine Stahllegierung wie beispielsweise S235 ist.

16. Gelöteter Gegenstand erhältlich durch ein Verfahren nach einem der Ansprüche 13 bis 15.
